# FASCICULE DE BREVET EUROPEEN

(11) **EP 2 858 880 B1**
(45) Date de publication et mention de la délivrance du brevet: **02.08.2017**
(21) Numéro de dépôt: 13726233.3
(22) Date de dépôt: 03.06.2013
(51) Int. Cl.: B62D 25/14

(54) **TRAVERSE POUR PLANCHE DE BORD DE VÉHICULE POURVUE D'UNE ENTRETOISE DE RENFORT DORSAL EN COMPOSITE FIBRÉ**
QUERSTREBE FÜR EIN FAHRZEUGARMATURENBRETTS MIT EINER VERSTÄRKENDEN HINTERKLAMMER AUS FASERMATERIAL
CROSSMEMBER FOR A VEHICLE DASHBOARD PROVIDED WITH A REINFORCING BACK BRACE MADE OF A FIBROUS COMPOSITE

(30) Priorité: 07.06.2012 FR 1255343
(43) Date de publication de la demande: 15.04.2015
(73) Titulaire: Peugeot Citroën Automobiles SA, 78140 Vélizy Villacoublay (FR); Faurecia Intérieur Industrie, 92000 Nanterre (FR)
(72) Inventeur: APPASAMY, Jean Michel, F-78760 Jouars Pontchartrain (FR); BRANCHERIAU, Christian, F-95220 Herblay (FR); DA COSTA PITO, Sergio, F-95800 Courdimanche (FR); TRANNOY, Mickael, F-60730 Cauvigny (FR)
(74) Mandataire: Fosse, Danièle
(86) Numéro de dépôt international: PCT/EP2013/061389
(87) Numéro de publication internationale: WO 2013/182522

(56) Documents cités:
- DE-A1-102010 021 123
- DE-A1-102010 037 462
- US-A- 5 823 602
- US-A- 5 934 744
- US-A1- 2004 188 885
- US-A1- 2005 253 423

## Description

La présente invention revendique la priorité de la demande française 1255343 déposée le 7 juin 2012.

La présente invention se rapporte au domaine général des traverses destinées à équiper des véhicules, et plus particulièrement à venir se fixer à la caisse du véhicule, transversalement au sens de la marche, pour permettre la fixation de la planche de bord dudit véhicule ainsi que de divers accessoires tels que ventilation, colonne de direction, boîte à fusibles, colonne de direction, boîte à gants, etc. Le document US 2005/0253423 A1 décrit une telle traverse.

De manière connue, de telles traverses comprennent généralement une barre transversale formée d'une tubulure en acier qui s'étend entre deux brides de fixation permettant d'arrimer ladite barre à la caisse du véhicule, et qui est en outre usuellement soutenue par une jambe de force centrale portant sur le plancher du véhicule.

Bien que les traverses connues donnent généralement satisfaction, notamment en raison de leur solidité, elles peuvent toutefois souffrir de certains inconvénients.

En particulier, leur fabrication peut nécessiter un outillage lourd, encombrant et coûteux, incluant par exemple des machines de découpe et de soudage des tôles, ainsi que des presses d'emboutissage nécessairement équipées de poinçons et matrices spécifiques.

En outre, les traverses connues présentent souvent un poids relativement élevé qui complique leur manipulation lors de l'assemblage et contribue par ailleurs à alourdir le véhicule, au détriment de la consommation de carburant de ce dernier.

Enfin, il est parfois difficile d'agencer convenablement la traverse afin d'éviter les phénomènes de résonance susceptibles de propager vers l'habitacle des vibrations du moteur ou de la caisse.

Les objets assignés à l'invention visent par conséquent à proposer une nouvelle traverse pour planche de bord de véhicule qui allie légèreté et propriétés mécaniques élevées, appropriées à sa destination, et notamment qui présente une résistance, une rigidité et un comportement vibratoire comparables voire supérieurs à ceux des tubulures métalliques connues.

Un autre objet assigné à l'invention vise à proposer un nouveau procédé de fabrication de traverses pour planche de bord qui permette d'obtenir une traverse légère et robuste, tout en étant simple à mettre en oeuvre, rapide, peu onéreux, et polyvalent.

Les objets assignés à l'invention sont atteints à l'aide d'une traverse de planche de bord pour véhicule, ladite traverse comprenant une barre transversale qui s'étend en longueur selon une ligne génératrice G destinée à être orientée sensiblement selon la largeur de la caisse du véhicule, transversalement à la direction de marche dudit véhicule, ainsi qu'au moins une bride de liaison conçue pour permettre la fixation de ladite barre transversale sur la caisse dudit véhicule, ladite traverse étant caractérisée en ce que ladite barre transversale est formée, au moins sur une partie de sa longueur, d'une part par une première pièce formant une âme porteuse qui possède une paroi latérale bombée autour de ladite ligne génératrice G, de sorte à présenter, en section normale à la ligne génératrice, une première branche et une seconde branche qui sont reliées l'une à l'autre par une portion de raccordement commune et qui bordent ainsi une cavité, et d'autre part par une seconde pièce, distincte de la première, qui forme une entretoise de renfort réalisée dans un matériau composite fibré comprenant des fibres disposées dans une matrice, et qui relie la première branche à la seconde branche.

Les objets assignés à l'invention sont également atteints à l'aide d'un procédé de fabrication d'une traverse de planche de bord pour véhicule devant être pourvue d'une barre transversale qui s'étend en longueur selon une ligne génératrice G destinée à être orientée sensiblement selon la largeur de la caisse du véhicule, transversalement à la direction de marche dudit véhicule, et d'au moins une bride de liaison conçue pour permettre la fixation de ladite barre transversale sur la caisse dudit véhicule, ledit procédé étant caractérisé en ce qu'il comprend une étape (a) de fabrication d'une âme porteuse destinée à former l'infrastructure de la barre transversale sur au moins une partie de la longueur de ladite barre, étape au cours de laquelle on réalise une âme porteuse rigide à paroi bombée, en incurvant ou en pliant, par exemple par pliage ou emboutissage, un flan de base, du genre nappe composite fibrée, autour de la ligne génératrice G de sorte à former, en section normale à ladite ligne génératrice, une première branche et une seconde branche qui sont reliées l'une à l'autre par une portion de raccordement commune et qui bordent ainsi une cavité, une étape (b) de fabrication d'une entretoise de renfort composite au cours de laquelle on forme une entretoise de renfort rigide dans un matériau composite fibré, puis une étape (c) d'assemblage au cours de laquelle on fixe l'entretoise de renfort préformée aux branches de l'âme porteuse, de préférence à distance de la portion de raccordement, de sorte à former, sur au moins une portion de la longueur de la barre transversale, un tronçon tubulaire renforcé.

Avantageusement, la traverse conforme à l'invention combine la légèreté d'une âme porteuse creuse à la rigidité structurelle d'une tubulure, de volume relativement étendu, grâce au renfort que lui procure l'entretoise de renfort qui stabilise les branches de l'âme, et qui améliore ainsi significativement la tenue de l'ensemble notamment à la flexion, à la torsion, à l'écrasement et au flambage.

Avantageusement, l'usage d'une entretoise en matériau composite fibré, de préférence à matrice polymère, permet du reste d'obtenir d'excellentes propriétés mécaniques, et notamment une grande robustesse et une rigidité élevée, au moyen d'un matériau qui reste particulièrement léger, moins dense et globalement plus léger qu'un alliage métallique, ce qui permet d'alléger la traverse dans son ensemble.

De surcroît, un tel matériau composite possède une indéniable facilité de mise en forme, son utilisation permettant au procédé conforme à l'invention de réaliser des économies tant de matière première, que d'énergie ou d'outillage.

Par ailleurs, la facilité de mise en forme dudit matériau composite autorise une grande liberté dans le choix des formes et des dimensions de l'entretoise de renfort, ce qui permet d'adapter celle-ci selon une multitude de variantes, et de l'associer en outre soit à une même âme porteuse, soit à plusieurs types d'âmes porteuses, afin d'obtenir la combinaison qui présente les meilleures performances, pour un véhicule donné, en matière de tenue mécanique et/ou de comportement vibratoire.

Avantageusement, le caractère modulaire de la traverse conforme à l'invention, avec une telle différenciation des pièces qui la constituent et qui peuvent être adaptées chacune indépendamment de l'autre, dans leurs formes, dimensions, ou matériaux constitutifs, confère en outre au procédé conforme à l'invention une grande polyvalence.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
- La figure 1 illustre, selon une vue en perspective éclatée, un exemple de traverse de planche de bord conforme à l'invention.
- La figure 2 illustre, selon une vue en perspective, la traverse de la figure 1 une fois assemblée.

Les figures 3A et 3B illustrent, selon des vues en perspective, une nappe à fibres croisées inclinées permettant de réaliser une variante d'entretoise de renfort mise en oeuvre au sein des traverses des figures 1 et 2 ainsi que, respectivement, l'entretoise ainsi obtenue à partir d'une telle nappe.

Les figures 4A et 4B illustrent, selon des vues en perspective, une nappe à fibres longitudinales continues permettant de réaliser un variante d'âme porteuse mise en oeuvre au sein des traverses des figures 1 et 2 ainsi que, respectivement, l'âme porteuse ainsi obtenue à partir d'une telle nappe.

Les figures 5, 6, 7 et 8 illustrent, selon des vues en section transverse, différentes variantes d'agencement d'entretoises de renfort au sein de traverses conformes à l'invention.

La présente invention concerne une traverse de planche de bord 1 pour véhicule, ladite traverse comprenant une barre transversale 2 qui s'étend en longueur selon une ligne génératrice G destinée à être orientée sensiblement selon la largeur de la caisse du véhicule (non représentée), transversalement à la direction de marche (avant-arrière) dudit véhicule, ainsi qu'au moins une bride de liaison 3, 4 conçue pour permettre la fixation de ladite barre transversale 2 sur la caisse dudit véhicule.

Bien entendu, l'invention concerne également un véhicule (non représenté), et notamment un véhicule automobile, équipé d'une traverse de planche de bord conforme à l'invention.

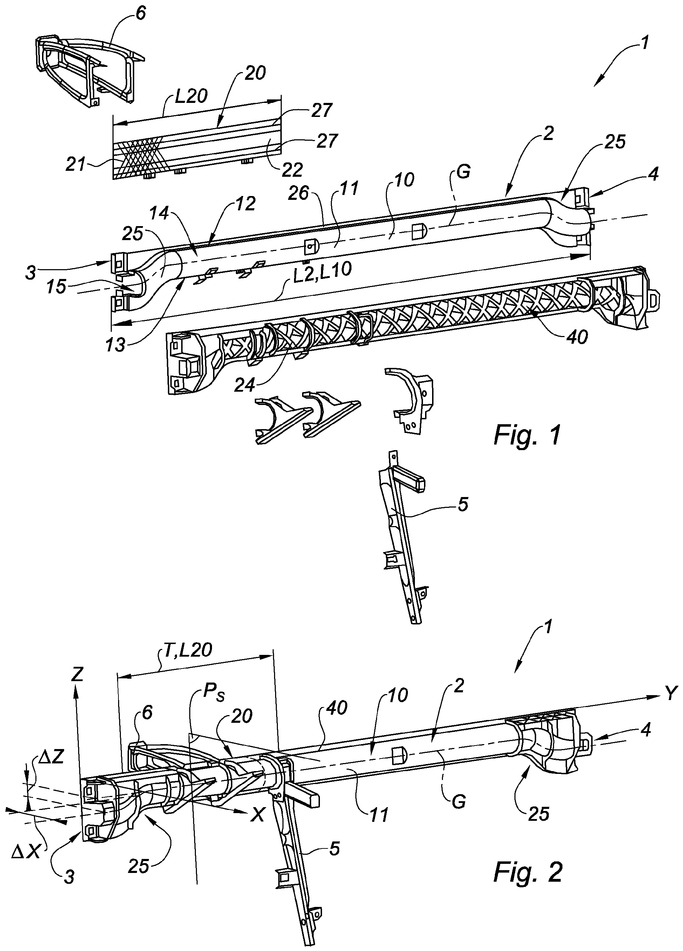

De préférence, tel que cela est illustré sur les figures 1 et 2, la traverse 1 comprend au moins deux brides de liaison 3, 4 disposées longitudinalement de part et d'autre de la barre transversale 2, sensiblement aux extrémités de cette dernière, de telle sorte que lesdites brides peuvent venir se fixer chacune à l'un des côtés (gauche et droit) de la caisse du véhicule, la traverse s'étendant ainsi, une fois montée, transversalement à la direction de marche du véhicule, et sensiblement sur toute la largeur de ce dernier.

La traverse comprendra de préférence également une jambe de force 5 destinée à venir en appui sur le plancher du véhicule afin de soutenir la barre transversale 2, dans une position intermédiaire à distance des deux brides de liaison 3, 4 ainsi que, préférentiellement, une fourche de fixation 6, de préférence déformable en cas de choc, et par exemple réalisée en acier, qui retient la traverse, et plus particulièrement la barre transversale 2, à une portion avant de la caisse du véhicule, de préférence sensiblement en vis-à-vis de la colonne de direction.

Par convention, et par commodité de description, on désignera par « X » la direction correspondant à la direction horizontale de marche avant-arrière du véhicule, par « Y » la direction latérale transverse dudit véhicule, qui correspond globalement à la direction d'extension longitudinale de la traverse 1 et plus particulièrement de la barre transversale 2 selon la génératrice G, et par « Z » la direction, ici verticale, qui forme avec les précédentes un trièdre direct.

Selon l'invention, la barre transversale 2 est formée, au moins sur une partie de sa longueur L2, d'une part par une première pièce formant une âme porteuse 10 qui possède une paroi latérale bombée 11 autour de ladite ligne génératrice G, de sorte à présenter, en section normale PS à la ligne génératrice, une première branche 12 et une seconde branche 13 qui sont reliées l'une à l'autre par une portion de raccordement 14 commune et qui bordent ainsi une cavité 15, laquelle s'ouvre de préférence à l'opposé de ladite portion de raccordement 14, tel que cela est notamment illustré sur les figures 1 et 5 à 8, et d'autre part par une seconde pièce, distincte de la première, qui forme une entretoise de renfort 20 réalisée dans un matériau composite fibré comprenant des fibres 21 disposées dans une matrice 22, et qui relie la première branche 12 à la seconde branche 13.

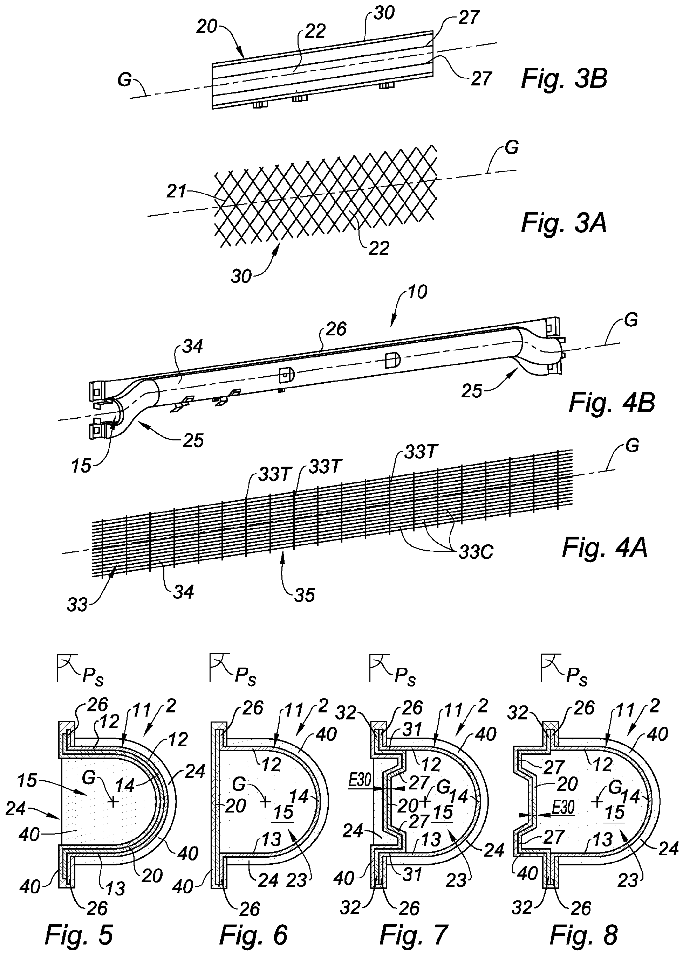

Selon une variante de réalisation, correspondant à la figure 5, l'entretoise de renfort 20 pourra épouser sensiblement la face concave de la paroi 11, et donc de la cavité 15.

Selon d'autres variantes de réalisation, correspondant aux figures 6, 7 et 8, l'entretoise de renfort 20 pourra relier la première branche 12 à la seconde branche 13 à distance de la portion de raccordement 14, à la manière d'un couvercle venant refermer la cavité 15, sensiblement à l'opposé de ladite portion de raccordement, et de préférence selon un tracé non symétrique à celui de la paroi 11.

La cavité 15 pourra quant à elle être laissée vide, ou bien au contraire être comblée par de la mousse 23, telle que de la mousse polymère, afin par exemple d'améliorer la capacité de la traverse 1 à amortir ou absorber les vibrations.

Selon une autre variante, correspondant par exemple à celle de la figure 5, la cavité 15 pourra être occupée au moins en partie par des cloisons ou des nervures 24 venant étayer la face concave de l'entretoise 20, et, par son intermédiaire, la face concave de la paroi 11.

De préférence, l'âme porteuse 10, formant l'infrastructure creuse de la barre transversale 2, s'étendra sur au moins 50 %, au moins 75 %, au moins 80 %, au moins 90 %, voire sensiblement sur la totalité de la longueur L2 de ladite barre transversale, et plus globalement de la longueur totale de la traverse 1.

Avantageusement, une telle âme porteuse 10 peut former une infrastructure de maintien, de type poutre, capable de soutenir la barre transversale sensiblement sur tout son long, et notamment d'assurer au moins en partie sinon en majorité la rigidité de ladite barre transversale 2, et en particulier d'encaisser les contraintes de compression, traction, torsion ou flexion que subit cette dernière au sein du véhicule.

De préférence, ladite âme porteuse suivra une génératrice G, ou « axe générateur central », majoritairement rectiligne, en particulier dans la portion longitudinalement centrale de la barre 2, et de préférence sensiblement parallèle à la direction Y du véhicule.

Il est toutefois envisageable que la ligne génératrice G soit localement courbe, et en particulier qu'elle présente, par exemple vers ses extrémités, des coudes 25 correspondant par exemple à une ou des déviations ΔX, ΔZ en X et/ou en Z, tel que cela est notamment illustré sur les figures 1, 2 et 4B, afin par exemple d'adapter, ou de renforcer la rigidité structurelle de la traverse 1.

De préférence, le bombé convexe de la paroi 11, et plus globalement de la barre transversale 2, sera destiné à être orienté vers l'habitacle du véhicule, en direction de l'arrière, tandis que l'entretoise 20 sera disposée dans la portion dorsale de la traverse, vers l'avant du véhicule, côté caisse et capot moteur, de préférence selon un plan sensiblement vertical.

De préférence la paroi pleine 11 de l'âme porteuse 10 suit un contour convexe régulièrement incurvé en U ou en Ω, tel que cela est illustré sur les figures 1, 2, 4A et 5 à 8.

En effet, bien qu'il ne soit pas exclu que le bombé de la paroi 11 puisse être conféré globalement par une ligne brisée comprenant une succession de segments (rectilignes ou courbes) adjacents séparés par des plis, on privilégiera de préférence une courbure régulière et lisse, qui peut éviter notamment les concentrations de contraintes et permet de simplifier par ailleurs la réalisation de l'âme en une seule pièce et une seule passe de mise en forme, tout en respectant l'intégrité du matériau constitutif de ladite âme 10.

A cet effet, la portion de raccordement 14 pourra par exemple présenter un tracé sensiblement en arc de cercle, et plus particulièrement en demi-cercle, que les branches 12, 13, de préférence sensiblement parallèles l'une à l'autre, abordent de façon tangente.

Par ailleurs, les extrémités libres de la première branche 12 et de la seconde branche 13 présentent de préférence des rabats de fixation 26 sensiblement plans contre lesquels l'entretoise de renfort 20 vient en appui.

De préférence, lesdits rabats 26 pourront être formés d'un seul tenant avec la paroi 11, par des languettes repliées, de préférence vers l'extérieur.

Lesdits rabats 26, situés de part et d'autre de la cavité 15, pourront de surcroît être coplanaires, et de préférence situés sensiblement dans un même plan vertical (parallèle à celui délimité par les directions Y et Z), de sorte à faciliter l'accolement et la fixation à plat de l'entretoise 20 contre l'âme 10.

De préférence, l'ensemble ainsi formé présentera une section transverse asymétrique, et formera préférentiellement une sorte de tunnel dont l'âme porteuse 10 forme la voûte, de type goulotte, et dont l'entretoise de renfort 20 ferme la base à la manière d'un couvercle.

En tout état de cause, l'assemblage, et plus particulièrement la superposition de l'âme porteuse 10 et de l'entretoise 20, qu'elle laisse ou non subsister une cavité 15 entre ces éléments, permet d'obtenir, au sein de la barre transversale 2, un tronçon renforcé T, de préférence rectiligne, dont la longueur correspond à la distance sur laquelle l'âme 10 et l'entretoise 20 se chevauchent, et qui est particulièrement simple à réaliser.

A ce titre, bien qu'il ne soit pas exclu que l'entretoise de renfort 20 puisse s'étendre sur plus de 50 %, de 75 % voire sensiblement sur la totalité de la longueur L10 de l'âme porteuse, et plus globalement de la longueur L2 de la barre transversale, ladite entretoise de renfort 20 couvre de préférence au moins 25 %, voire au moins 30 %, et de préférence environ 35 % ou 40 %, de la longueur L2 de la barre transversale 2, et plus globalement de la traverse 1, tel que cela est illustré sur les figures 1 et 2.

La longueur L20 de l'entretoise, considérée selon la ligne génératrice G, et donc celle du tronçon renforcé T, sera donc de préférence inférieure à la longueur L10 de l'âme 10, et plus globalement à celle L2, de préférence sensiblement égale à cette dernière, de la barre transversale.

La largeur de l'entretoise 20 pourra quant à elle correspondre sensiblement à celle de l'âme porteuse 10, le cas échéant rabats de fixation 26 compris, tel que cela est illustré sur les figures 1 et 5 à 8.

De façon particulièrement préférentielle, le tronçon renforcé T combinant âme 10 et entretoise 20 couvre, voire correspond exclusivement, au tronçon de la barre transversale 2 sur lequel viennent en prise la première bride de liaison 3 (à gauche sur les figures 1 et 2), la jambe de force 5 et la fourche 6.

C'est en effet dans la zone tripode ainsi délimitée que la barre transversale 2 est la plus sollicitée mécaniquement, et qu'elle nécessite par conséquent la structure la plus robuste.

La longueur L20 de l'entretoise 20 et sa position relative par rapport à l'âme le long de la ligne génératrice G peuvent donc être déterminées, le cas échéant, de sorte à définir une couverture partielle juste nécessaire et suffisante pour le renforcement de ladite zone tripode, ce qui permet d'économiser de la matière en ne renforçant pas inutilement le reste de la barre 2, l'entretoise 20 pouvant par exemple s'interrompre à partir de la jambe de force 5, le tronçon situé au-delà de ladite jambe de force 5 et jusqu'à la seconde bride de fixation 4 (ici à droite) pouvant être dépourvu d'un tel renfort.

Le cas échéant, il est également envisageable de prévoir plusieurs entretoises de renfort 20 distinctes réparties à distance les unes des autres le long de la barre transversale 2, et plus préférentiellement le long d'une même âme porteuse 10, de sorte à créer une pluralité de tronçons renforcés dans les zones critiques de ladite barre 2.

De préférence, l'entretoise de renfort 20 est formée par une plaque présentant des plis ou des reliefs 27, dont la hauteur dépasse de préférence l'épaisseur de base E30 du flan 30 ayant servi à façonner ladite plaque, lesdits reliefs 27 formant, entre les branches 12, 13 que relie la plaque, des nervures contribuant à rigidifier ladite plaque, tel que cela est notamment illustré sur les figures 1, 3B, 7 et 8.

Avantageusement, de tels reliefs 27 raidisseurs peuvent être obtenus par emboutissage, pliage, voire froncement, et contribuent à augmenter le module de torsion et les modules de flexion de l'entretoise 20, et ainsi sa résistance à la torsion, à la flexion ou au flambage, tout en en préservant sa finesse et sa légèreté.

Par ailleurs, l'entretoise de renfort 20 présente de préférence des épaulements 31 anti-rapprochement qui font saillie à l'intérieur de la cavité 15, entre les première et seconde branches 12, 13, de sorte à offrir auxdites branches 12, 13 un appui qui s'oppose à leur rapprochement, tel que cela est par exemple illustré sur la figure 7.

Avantageusement, l'entretoise 20 pourra ainsi former un pilier particulièrement résistant qui s'oppose efficacement à l'écrasement transverse de l'âme porteuse 10.

De préférence, lesdits épaulements 31 pourront former des plans sécants avec des pattes de fixation 32 venant elles-mêmes en appui contre les rabats 26, ce qui permet d'obtenir une fixation renforcée et un effet de butée dans deux directions distinctes, sensiblement en équerre.

Le cas échéant, le rôle de tirant de l'entretoise 20 s'opposant à l'écartement des branches 12, 13 (et plus particulièrement à l'ouverture du U), par exemple sous la torsion autour de la ligne G, pourra ainsi également être renforcé par cette extension des surfaces de contact et de fixation.

De préférence, les épaulements 31 pourront par ailleurs coïncider avec tout ou partie des reliefs 27 raidisseurs, tel que cela est illustré sur la figure 7.

Il n'est toutefois pas exclu que lesdits reliefs raidisseurs 27 puissent, selon une autre variante de réalisation, être orientés vers l'extérieur de la cavité, en l'espèce en saillie vers l'avant, tel que cela est illustré sur la figure 8.

L'âme 10 peut être est réalisée dans un matériau différent de ou au contraire identique à celui qui constitue l'entretoise de renfort 20.

De façon particulièrement préférentielle, ladite âme porteuse 10 est également réalisée, comme l'entretoise de renfort 20, dans un matériau composite fibré, comprenant des fibres 33 disposées dans une matrice 34.

Les fibres de renfort 21, 33, qu'elles soient celles de l'entretoise 20 ou de l'âme 10, pourront notamment être formées par des fibres de verre, de carbone, d'aramide, etc.

Les matrices 22, 34 seront quant à elle préférentiellement réalisées dans un ou des matériaux polymères, tel que le polypropylène ou le polyamide, et plus préférentiellement dans un ou des polymères thermoplastiques, de type résine(s).

L'emploi de tels matériaux composites permet avantageusement d'alléger la barre 2, et donc la traverse 1, par rapport à une réalisation métallique, tout en conservant, grâce au renfort des fibres 21, 33, un module d'élasticité élevé, une grande rigidité, et une résistance importante à la traction, à la flexion et au flambage, sous les contraintes de compression latérale ou sous les efforts tranchants.

A ce titre, la barre transversale 2 possèdera de préférence une structure creuse, voire sensiblement tubulaire, délimitée par une peau composite relativement fine, de faible densité par rapport au métal, mais qui présentera une bonne rigidité et une bonne ténacité.

En outre, de tels matériaux composites fibrés peuvent simplifier la mise en forme desdites pièces, tout en limitant les chutes de matière première.

Il n'est bien entendu pas exclu que l'âme 10 et l'entretoise 20 soient réalisées dans un même matériau composite fibré, le cas échéant orienté de manière analogue par rapport à la ligne génératrice G.

Toutefois, le matériau composite fibré employé pour l'âme porteuse 10 présente de préférence une composition de matrice 34 et/ou de fibres 33, et/ou une orientation de fibres 33, et/ou une densité de fibres 33 différentes de celles du matériau composite fibré constitutif de l'entretoise de renfort 20.

A titre d'exemple, on pourra utiliser, pour former l'âme 10, un composite en fibres 33 de carbone contenant préférentiellement 90 % de fibres à 0 degré (dans l'alignement de la ligne génératrice) et 10 % de fibres à 90 degrés (transverses à la ligne génératrice), tel que cela est illustré sur la figure 4A, et pour former l'entretoise 20, un composite en fibres 21 de verre croisées, disposées préférentiellement pour moitié à +45 degrés, et pour moitié à -45 degrés, tel que cela est illustré sur la figure 3A.

Avantageusement, en conjuguant ainsi les matériaux, on peut conférer aux différentes portions latérales du tronçon renforcé T des propriétés mécaniques localement différenciées, dont la combinaison permet d'améliorer la tenue mécanique et/ou le comportement vibratoire de l'ensemble.

De préférence, l'âme porteuse 10 et/ou l'entretoise de renfort 20 sont formées chacune dans une seule nappe composite 30, 35 (dite aussi « patch », qui est un exemple particulier de « flan » adapté à la technologie des composites) d'un seul tenant, tel que cela est représenté sur les figures 4A et 3A respectivement.

On peut ainsi réaliser une substantielle économie de matière, et de surcroît mettre les pièces en forme rapidement, de préférence chacune en une seule opération de découpe puis une seule opération de frappe, et plus particulièrement de thermoformage sous presse, d'un seul et même patch 30, 35 correspondant, ce qui rend le procédé de fabrication adapté aux cadences de production de l'industrie automobile, avec un temps de cycle de l'ordre de quelques minutes, voire inférieur à la minute.

En outre, les pièces ainsi obtenues, bien que particulièrement fines et légères (de l'épaisseur d'une nappe 30, 35) sont toutefois particulièrement robustes et pourvues de qualités homogènes, grâce à leur réalisation d'un seul tenant.

Par ailleurs, l'entretoise de renfort 20 et/ou l'âme porteuse 10 présentent de préférence une pluralité de fibres 21, 33 continues sensiblement parallèles les unes aux autres qui s'étendent chacune sans interruption d'un bord à l'autre de ladite entretoise 20, respectivement d'un bord à l'autre de ladite âme porteuse 10.

Cette continuité des fibres 21, 33 améliore avantageusement la résistance mécanique des nappes 30, 35 correspondantes et donc des pièces obtenues à partir de celles-ci.

L'orientation du réseau de fibres continues pourra bien entendu être choisie de sorte à correspondre sensiblement à la direction des contraintes les plus sévères auxquelles la pièce sera exposée.

Le cas échéant, les fibres d'une même nappe pourront être agencées selon deux réseaux croisés de fibres continues, superposées ou entrelacées à la manière d'un textile.

A titre d'exemple, l'âme porteuse 10 pourra ainsi comprendre, de préférence en majorité, des fibres continues « de chaîne » 33C disposées sensiblement parallèlement à la ligne génératrice G, à la manière de tirants longitudinaux, et éventuellement des fibres continues « de trame » 33T sensiblement perpendiculaires aux précédentes, notamment dans une proportion de 90 % - 10 % telle que décrite plus haut, chaque réseau de fibres 33C, 33T joignant ainsi sans interruption un bord de découpe de la nappe 35 correspondante, de préférence rectangulaire, au bord de découpe opposé, tel que cela est illustré sur la figure 4A.

De préférence, les fibres 21 de l'entretoise de renfort 20 seront disposées au moins en partie selon un réseau croisé, pour au moins 25 %, voire sensiblement 50 %, selon un angle de +30 degrés à +60 degrés, et de préférence de +45 degrés par rapport à la génératrice G, et pour au moins 25 %, voire sensiblement 50 %, selon un angle de -30 degrés à -60 degrés, et de préférence de -45 degrés par rapport à ladite génératrice G.

Lesdites fibres pourront ainsi joindre continûment, de préférence à +/- 45 degrés, un bord de découpe de la nappe 30 correspondante, préférentiellement rectangulaire, au bord de découpe adjacent

Par ailleurs, tel que cela est illustré sur les figures 1, 2, et 5 à 8 l'âme porteuse 10, et plus globalement la barre transversale 2, peut être revêtue, sur tout ou partie de sa longueur, sur au moins l'une de ses faces, sinon sur les deux faces, d'une couche d'enrobage 40 non métallique, réalisée, de préférence par surmoulage, dans un matériau polymère, préférentiellement composite et distinct du matériau composite qui constitue ladite âme porteuse 10 et/ou de celui qui constitue l'entretoise 20.

Ladite couche d'enrobage 40 pourra par exemple être réalisée dans un matériau polymère, du genre polypropylène ou polyamide, éventuellement renforcé par des fibres courtes, non continues, dont la longueur individuelle pourra être inférieure à 25 mm, à 10 mm, voire par des fibres ultracourtes mesurant sensiblement entre 2 mm et 4 mm, et notamment en PA6GF60.

Avantageusement, un tel matériau est en effet particulièrement adapté à une mise en forme par injection en surmoulage sur l'âme porteuse 10, qui forme, localement épaulée par l'entretoise 20, la véritable armature fonctionnelle de la barre transversale 2.

Une telle couche d'enrobage 40 peut notamment servir à ajouter à la traverse 1, et plus particulièrement à la barre 2, des organes procurant des fonctions additionnelles, et ne participant pas, ou seulement marginalement, à la résistance structurelle de la barre 2, tels que par exemple des interfaces de fixation, du type pattes ou oeillets, permettant la fixation à la traverse d'accessoires tels que groupe de ventilation, radio, boîte à gants, etc.

Avantageusement, on pourra ainsi remplacer tout ou partie desdites interfaces de fixation, jusqu'à présent métalliques, par des organes en (second) matériau composite, et ainsi alléger d'autant la traverse 1.

Ladite couche d'enrobage 40 peut également permettre l'ajout ponctuel de nervures 24 dans la cavité 15 (figure 5), et/ou le long de la surface extérieure de la paroi bombée 11 (figures 5 à 8), et/ou un étayage par nervures 24, voire un comblement, des reliefs raidisseurs 27 apparents de l'entretoise 20 (figure 7).

A ce titre, tel que cela est illustré sur la figure 7 la couche d'enrobage pourra comprendre d'une part une plaque de base mince d'épaisseur sensiblement constante épousant la surface extérieure de l'entretoise de renfort 20 le long de la ligne génératrice G, ladite plaque de base étant renforcée localement par des nervures 24 transverses ou des cloisons dont la hauteur peut correspondre à celle des reliefs raidisseurs 27, et d'autre part des nervures de type arceaux de couverture épousant la surface extérieure de la paroi bombée 11.

Il est ainsi notamment envisageable d'étayer le tronçon renforcé T par des nervures 24 transverses surmoulées de chaque côté, voire sensiblement sur tout le pourtour latéral, dudit tronçon.

La traverse 1 pourra donc présenter globalement une structure multicouches différenciée dans sa composition et dans sa fonction, comprenant au moins une première couche d'armature porteuse formée par l'âme 10, et le cas échéant l'entretoise 20, de préférence issues de nappes 30, 35 préformées à fibres continues, et une seconde couche d'enrobage 40 offrant par exemple des interfaces de fixation additionnelles, de préférence formée par surmoulage dans un composite à fibres courtes.

Selon une variante de réalisation, la ou les brides de liaison 3, 4 pourront être réalisées dans un matériau composite fibré, qui peut être identique, voire venu de matière avec celui composant l'âme 10.

Bien entendu, l'homme du métier sera en outre à même d'adapter au besoin l'invention en isolant ou combinant tout ou partie des caractéristiques susmentionnées.

L'invention concerne également en tant que tel un procédé de fabrication d'une traverse de planche de bord 1 pour véhicule devant être pourvue d'une barre transversale 2 qui s'étend en longueur selon une ligne génératrice G destinée à être orientée sensiblement selon la largeur de la caisse du véhicule, transversalement à la direction de marche dudit véhicule, et d'au moins une bride de liaison 3, 4 conçue pour permettre la fixation de ladite barre transversale 2 sur la caisse dudit véhicule.

Selon l'invention, ledit procédé comprend une étape (a) de fabrication d'une âme porteuse 10 destinée à former l'infrastructure de la barre transversale 2 sur au moins une partie de la longueur de ladite barre, étape au cours de laquelle on réalise une âme porteuse 10 rigide à paroi 11 bombée, en incurvant ou en pliant, par exemple par pliage ou emboutissage, un flan de base 35, du genre nappe composite fibrée, autour de ladite ligne génératrice G de sorte à former, en section normale à ladite ligne génératrice, une première branche 12 et une seconde branche 13 qui sont reliées l'une à l'autre par une portion de raccordement 14 commune et qui bordent ainsi une cavité 15, une étape (b) de fabrication d'une entretoise de renfort 20 composite au cours de laquelle on forme une entretoise de renfort 20 rigide dans un matériau composite fibré, puis une étape (c) d'assemblage au cours de laquelle on fixe l'entretoise de renfort 20 préformée aux branches 12, 13 de l'âme porteuse 10, de préférence à distance de la portion de raccordement 14, de sorte à former, sur au moins une portion de la longueur L2 de la barre transversale, un tronçon tubulaire renforcé T.

Avantageusement, la réunion de l'âme 10 et de l'entretoise 20 préformées séparément l'une de l'autre peut être réalisée par tout procédé d'assemblage approprié, en particulier à l'interface rabats 26/pattes de fixation 32, et notamment par rivetage, par soudage, par exemple par thermosoudage ou soudage aux ultra-sons, par collage, par exemple époxy ou à l'aide d'une colle structurelle de type polyuréthane, voire par piquage en entrelaçant les fibres de l'une des nappes 30 avec les fibres de la nappe 35 qui lui est accolée, le cas échéant par l'intermédiaire de fibres de suture rapportées et piquées à cet effet à travers lesdites nappes.

On obtiendra ainsi avantageusement un sous-ensemble de base solidaire « tout composite », particulièrement léger et résistant.

Le surmoulage de la couche d'enrobage 40 sur ledit sous-ensemble de base pourra intervenir postérieurement à cette première étape d'assemblage, suivi par la fixation de la jambe de force 5 et de la fourche 6.

## Revendications

1. Traverse de planche de bord (1) pour véhicule, ladite traverse (1) comprenant une barre transversale (2) qui s'étend en longueur selon une ligne génératrice (G) destinée à être orientée sensiblement selon la largeur de la caisse du véhicule, transversalement à la direction de marche dudit véhicule, ainsi qu'au moins une bride de liaison (3, 4) conçue pour permettre la fixation de ladite barre transversale (2) sur la caisse dudit véhicule, ladite traverse (1) étant **caractérisée en ce que** ladite barre transversale (2) est formée, au moins sur une partie de sa longueur, d'une part par une première pièce formant une âme porteuse (10) qui possède une paroi latérale (11) bombée autour de ladite ligne génératrice (G), de sorte à présenter, en section normale à la ligne génératrice, une première branche (12) et une seconde branche (13) qui sont reliées l'une à l'autre par une portion de raccordement (14) commune et qui bordent ainsi une cavité (15), et d'autre part par une seconde pièce, distincte de la première, qui forme une entretoise de renfort (20) réalisée dans un matériau composite fibré comprenant des fibres (21) disposées dans une matrice (22), et qui relie la première branche (12) à la seconde branche (13).

2. Traverse selon la revendication 1 **caractérisée en ce que** l'âme porteuse (10) est réalisée dans un matériau composite fibré, qui présente de préférence une composition de matrice (34) et/ou de fibres (33), et/ou une orientation de fibres (33) différentes de celles du matériau composite fibré constitutif de l'entretoise de renfort (20).

3. Traverse selon la revendication 1 ou 2 **caractérisée en ce que** l'âme porteuse (10) et/ou l'entretoise de renfort (20) sont formées chacune dans une seule nappe composite (35, 30) d'un seul tenant.

4. Traverse selon l'une des revendications 1 à 3 **caractérisée en ce que** l'entretoise de renfort (20) et/ou l'âme porteuse (10) présentent une pluralité de fibres (21, 33) continues sensiblement parallèles les unes aux autres qui s'étendent chacune sans interruption d'un bord à l'autre de ladite entretoise (20), respectivement d'un bord à l'autre de ladite âme porteuse (10).

5. Traverse selon l'une des revendications précédentes **caractérisée en ce que** les fibres (21) de l'entretoise de renfort (20) sont disposées au moins en partie selon un réseau croisé, pour au moins 25 %, voire sensiblement 50 %, selon un angle de +30 degrés à +60 degrés, et de préférence de +45 degrés par rapport à la génératrice (G), et pour au moins 25 %, voire sensiblement 50 %, selon un angle de -30 degrés à -60 degrés, et de préférence de -45 degrés par rapport à ladite génératrice (G).

6. Traverse selon l'une des revendications précédentes **caractérisée en ce que** l'entretoise de renfort (20) est formée par une plaque présentant des plis ou des reliefs (27) formant, entre les branches (12, 13) qu'elle relie, des nervures contribuant à rigidifier ladite plaque.

7. Traverse selon l'une des revendications précédentes **caractérisée en ce que** l'entretoise de renfort (20) présente des épaulements (31) anti-rapprochement qui font saillie à l'intérieur de la cavité (15), entre les branches (12, 13), de sorte à offrir auxdites branches (12, 13) un appui qui s'oppose à leur rapprochement.

8. Traverse selon l'une des revendications précédentes **caractérisée en ce que** l'entretoise de renfort (20) couvre au moins 25%, et de préférence environ 35 % ou 40 %, de la longueur (L2) de la barre transversale (2).

9. Traverse selon l'une des revendications précédentes **caractérisée en ce que** la paroi pleine (11) de l'âme porteuse (10) suit un contour convexe régulièrement incurvé en U ou en Ω et **en ce que** les extrémités libres de la première et de la seconde branche (12, 13) présentent des rabats de fixation (26) sensiblement plans contre lesquels l'entretoise de renfort (20) vient en appui.

10. Procédé de fabrication d'une traverse de planche de bord (1) pour véhicule devant être pourvue d'une barre transversale (2) qui s'étend en longueur selon une ligne génératrice (G) destinée à être orientée sensiblement selon la largeur de la caisse du véhicule, transversalement à la direction de marche dudit véhicule, et d'au moins une bride de liaison (3, 4) conçue pour permettre la fixation de ladite barre transversale sur la caisse dudit véhicule, ledit procédé étant **caractérisé en ce qu'**il comprend une étape (a) de fabrication d'une âme porteuse (10) destinée à former l'infrastructure de la barre transversale (2) sur au moins une partie de la longueur de ladite barre, étape au cours de laquelle on réalise une âme porteuse rigide à paroi (11) bombée, en incurvant ou en pliant, par exemple par pliage ou emboutissage, un flan de base (35), du genre nappe composite fibrée, autour de ladite ligne génératrice (G) de sorte à former, en section normale à ladite ligne génératrice, une première branche (12) et une seconde branche (13) qui sont reliées l'une à l'autre par une portion de raccordement (14) commune et qui bordent ainsi une cavité (15), une étape (b) de fabrication d'une entretoise de renfort (20) composite au cours de laquelle on forme une entretoise de renfort rigide dans un matériau composite fibré, puis une étape (c) d'assemblage au cours de laquelle on fixe l'entretoise de renfort (20) préformée aux branches (12, 13) de l'âme porteuse (10), de préférence à distance de la portion de raccordement (14), de sorte à former, sur au moins une portion de la longueur (L2) de la barre transversale, un tronçon tubulaire renforcé (T).

## Patentansprüche

1. Armaturenbrettquerstrebe (1) für Fahrzeug, wobei die Querstrebe (1) eine Querstange (2) umfasst, die sich längs entlang einer Mantellinie (G) erstreckt, die dazu bestimmt ist, im Wesentlichen entlang der Breite der Karosserie des Fahrzeugs, quer zu der Fahrtrichtung des Fahrzeugs ausgerichtet zu sein, sowie mindestens einen Verbindungsflansch (3, 4), der konzipiert ist, um die Befestigung der Querstange (2) auf der Karosserie des Fahrzeugs zu erlauben, Querstrebe (1) **dadurch gekennzeichnet, dass** die Querstange (2) mindestens auf einem Teil ihrer Länge einerseits von einem ersten Teil gebildet ist, das eine Tragseele (10) bildet, die eine gewölbte Seitenwand (11) besitzt, die um die Mantellinie (G) derart gewölbt ist, dass sie im Normalschnitt zu der Mantellinie einen ersten Schenkel (12) und einen zweiten Schenkel (13) bildet, die miteinander durch einen gemeinsamen Anschlussabschnitt (14) verbunden sind, und die daher einen Hohlraum (15) einfassen, und andererseits von einem zweiten Teil, das von dem ersten getrennt ist, das eine Verstärkungshinterklammer (20) bildet, die aus einem Faserverbundwerkstoff hergestellt ist, der Fasern (21) umfasst, die in einer Matrix (22) angeordnet sind, und die den ersten Schenkel (12) mit dem zweiten Schenkel (13) verbindet.

2. Querstrebe nach Anspruch 1, **dadurch gekennzeichnet, dass** die Tragseele (10) aus einem Faserverbundwerkstoff hergestellt ist, der bevorzugt eine Zusammensetzung aus Matrix (34) und/oder Fasern (33) und/oder eine Ausrichtung von Fasern (33) aufweist, die von denjenigen des Faser Verbundwerkstoffs, der die Verstärkungshinterklammer (20) bildet, unterschiedlich sind.

3. Querstrebe nach Anspruch 1 oder 2, **dadurch gekennzeichnet, dass** die Tragseele (10) und/oder die Verstärkungshinterklammer (20) jeweils aus einer einzigen Verbundwerkstoffmatte (35, 30) aus einem Stück gebildet sind.

4. Querstrebe nach einem der Ansprüche 1 bis 3, **dadurch gekennzeichnet, dass** die Verstärkungshinterklammer (20) und/oder die Tragseele (10) eine Vielzahl kontinuierlicher im Wesentlichen zueinander paralleler Fasern (21, 33), die sich jeweils unterbrechungslos von einem Rand zum anderen der Hinterklammer (20) jeweils von einem Rand zum anderen der Tragseele (10) erstrecken, aufweisen.

5. Querstrebe nach einem der vorhergehenden Ansprüche, **dadurch gekennzeichnet, dass** die Fasern (21) der Verstärkungshinterklammer (20) mindestens zum Teil gemäß einem verkreuzten Netz angeordnet sind, zu mindestens 25 % ja sogar im Wesentlichen 50 % gemäß einem Winkel von +30 Grad bis +60 Grad und bevorzugt von +45 Grad in Bezug zu der Mantellinie (G), und für mindestens 25 %, ja sogar im Wesentlichen 50 %, gemäß einem Winkel von -30 Grad bis -60 Grad und bevorzugt von -45 Grad in Bezug zu der Mantellinie (G).

6. Querstrebe nach einem der vorhergehenden Ansprüche, **dadurch gekennzeichnet, dass** die Verstärkungshinterklammer (20) aus einer Platte gebildet ist, die Falten oder Reliefs (27) aufweist, die zwischen den Schenkeln (12, 13), die sie verbindet, Rippen bilden, die zum Versteifen der Platte beitragen.

7. Querstrebe nach einem der vorhergehenden Ansprüche, **dadurch gekennzeichnet, dass** die Verstärkungshinterklammer (20) Annäherungsschutzansätze (31) aufweist, die im Inneren des Hohlraums (15) zwischen den Schenkeln (12, 13) derart vorragen, dass sie den Schenkeln (12, 13) eine Auflage bieten, die sich ihrer Annäherung entgegensetzt.

8. Querstrebe nach einem der vorhergehenden Ansprüche, **dadurch gekennzeichnet, dass** die Verstärkungshinterklammer (20) mindestens 25 % und bevorzugt etwa 35 % oder 40 % der Länge (L2) der Querstange (2) abdeckt.

9. Querstrebe nach einem der vorhergehenden Ansprüche, **dadurch gekennzeichnet, dass** die massive Wand (11) der Tragseele (10) einer konvexen, regelmäßig in U oder Ω gekrümmten Kontur folgt, und dass die freien Enden des ersten und des zweiten Schenkels (12, 13) im Wesentlichen flache Befestigungsklappen (26) aufweisen, gegen welche die Verstärkungshinterklammer (20) zum Aufliegen kommt.

10. Herstellungsverfahren einer Armaturenbrettquerstrebe (1) für Fahrzeug, die mit einer Querstange (2) versehen werden soll, die sich längs entlang einer Mantellinie (G) erstreckt, die dazu bestimmt ist, im Wesentlichen entlang der Breite der Karosserie des Fahrzeugs, quer zu der Fahrtrichtung des Fahrzeugs ausgerichtet zu sein, und mindestens einen Verbindungsflansch (3, 4), der ausgelegt ist, um das Befestigen der Querstange auf der Karosserie des Fahrzeugs zu erlauben, Verfahren **dadurch gekennzeichnet, dass** es einen Schritt (a) der Herstellung einer Tragseele (10) umfasst, die dazu bestimmt ist, die Infrastruktur der Querstange (2) auf mindestens einem Teil der Länge der Stange zu bilden, wobei man bei diesem Schritt eine starre Tragseele mit gewölbter Wand (11) herstellt, indem man zum Beispiel durch Falten oder Stanzen eine Basisplatte (35) des Typs Faserverbundstoffmatte um die Mantellinie (G) derart biegt oder faltet, dass im Normalschnitt zu der Mantellinie ein erster Schenkel (12) und ein zweiter Schenkel (13) gebildet werden, die miteinander durch einen gemeinsamen Anschlussabschnitt (14) verbunden sind und daher einen Hohlraum (15) einfassen, einen Schritt (b) des Herstellens einer Verbundwerkstoff-Verstärkungshinterklammer (20), bei dem man eine starre Verstärkungshinterklammer aus einem Faserverbundwerkstoff bildet, dann einen Schritt (c) des Zusammenfügens, bei dem man die vorgeformte Verstärkungshinterklammer (20) an den Schenkeln (12, 13) der Tragseele (10) bevorzugt von dem Anschlussabschnitt (14) beabstandet derart befestigt, dass auf mindestens einem Abschnitt der Länge (L2) der Querstange ein verstärkter röhrenförmiger Abschnitt (T) gebildet wird.

## Claims

1. A vehicle dashboard crossmember (1), said crossmember (1) including a crossbar (2) which extends lengthwise along a generatrix line (G) intended to be oriented substantially along the width of the body of the vehicle, transversely to the direction of travel of said vehicle, as well as at least one connection flange (3, 4) designed to permit the fixing of said crossbar (2) on the body of said vehicle, said crossmember (1) being **characterized in that** said crossbar (2) is formed, at least over a portion of its length, on the one hand by a first piece forming a load-bearing core (10) which has a lateral wall (11) rounded about said generatrix line (G), so as to present, in normal section to the generatrix line, a first branch (12) and a second branch (13) which are connected to one another by a common connection portion (14) and which thus define a cavity (15), and on the other hand by a second piece, distinct from the first, which forms a reinforcing brace (20) made of a fibrous composite material including fibres (21) disposed in a matrix (22), and which connects the first branch (12) to the second branch (13).

2. The crossmember according to Claim 1, **characterized in that** the load-bearing core (10) is made of a fibrous composite material, which preferably presents a composition of matrix (34) and/or of fibres (33), and/or an orientation of fibres (33) different from those of the fibrous composite material constituting the reinforcing brace (20).

3. The crossmember according to Claim 1 or 2, **characterized in that** the load-bearing core (10) and/or the reinforcing brace (20) are each formed in a single composite sheet(35, 30) in one piece.

4. The crossmember according to one of Claims 1 to 3, **characterized in that** the reinforcing brace (20) and/or the load-bearing core (10) present a plurality of continuous fibres (21, 33), substantially parallel to one another, which each extend without interruption from one edge to the other of said brace (20), respectively from one edge to the other of said load-bearing core (10).

5. The crossmember according to one of the preceding claims, **characterized in that** the fibres (21) of the reinforcing brace (20) are disposed at least partially along a crossed network, for at least 25%, even substantially 50%, along an angle of +30 degrees to +60 degrees, and preferably of +45 degrees with respect to the generatrix (G), and for at least 25 %, even substantially 50%, along an angle of -30 degrees to -60 degrees, and preferably of -45 degrees with respect to said generatrix (G).

6. The crossmember according to one of the preceding claims, **characterized in that** the reinforcing brace (20) is formed by a sheet having folds or reliefs (27) forming, between the branches (12, 13) which it connects, ribs contributing to stiffening said sheet.

7. The crossmember according to one of the preceding claims, **characterized in that** the reinforcing brace (20) has separation shoulders (31) which project in the interior of the cavity (15), between the branches (12, 13) so as to offer to said branches (12, 13) a support which opposes their moving closer together.

8. The crossmember according to one of the preceding claims, **characterized in that** the reinforcing brace (20) covers at least 25%, and preferably approximately 35% or 40%, of the length (L2) of the crossbar (2).

9. The crossmember according to one of the preceding claims, **characterized in that** the solid wall (11) of the load-bearing core (10) follows a convex contour regularly bent into a U- or Ω-shape and **in that** the free ends of the first and second branch (12, 13) present substantially flat fixing flaps (26), against which the reinforcing brace (20) comes to rest.

10. A method for producing a crossmember (1) for a vehicle dashboard, to be provided with a crossbar (2) which extends lengthwise along a generatrix line (G) intended to be oriented substantially along the width of the body of the vehicle, transversely to the direction of travel of said vehicle, and at least one connection flange (3, 4) designed to permit the fixing of said crossbar on the body of said vehicle, said method being **characterized in that** in includes a step (a) of producing a load-bearing core (10) intended to form the infrastructure of the crossbar (2) over at least a portion of the length of said bar, during which step a rigid load-bearing core is realized, with a rounded wall (11), by curving or bending, for example by bending or pressing, a base blank (35), of the fibrous composite sheet type, around said generatrix line (G) so as to form, in normal section to said generatrix line, a first branch (12) and a second branch (13) which are connected to one another by a common connection portion (14) and which thus define a cavity (15), a step (b) of producing a composite reinforcing brace (20), during which a rigid reinforcing brace is formed from a fibrous composite material, then an assembly step (c), during which the preformed reinforcing brace (20) is fixed to the branches (12, 13) of the load-bearing core (10), preferably at a distance from the connection portion (14), so as to form, over at least a portion of the length (L2) of the crossbar, a reinforced tubular section (T).
